# EUROPEAN PATENT APPLICATION

(11) **EP 4 129 092 A1**
(43) Date of publication of application: **08.02.2023**
(21) Application number: 21774341.8
(22) Date of filing: 11.03.2021
(51) Int. Cl.: A24F 40/10

(54) **LIQUID SUPPLY METHOD FOR ATOMIZER AND LIQUID SUPPLY APPARATUS THEREOF**

(30) Priority: 25.03.2020 CN 202010218795
(71) Applicant: Changzhou Patent Electronic Technology Co., Ltd, Changzhou, Jiangsu 213125 (CN)
(72) Inventor: QIU, Weihua, hangzhou, Jiangsu 213125 (CN)
(74) Representative: Zaboliene, Reda
(86) International application number: PCT/CN2021/080250
(87) International publication number: WO 2021/190318

(57) **Abstract**

A liquid supply method for an atomizer and a liquid supply apparatus thereof, relating to the technical field of smoking simulation. The method comprises: when a heating member carries out heating, acquiring a resistance value of the heating member, the resistance value of the heating member changing when the temperature of the heating member changes (S110); obtaining a liquid supply rule according to the resistance value of the heating member, the liquid supply rule comprising at least one of a liquid supply speed for supplying liquid to an atomizing cavity by a pump and a liquid supply duration in which liquid is supplied to the atomizing cavity by using the pump in a unit time period (S 120); and controlling the pump to supply liquid to the atomizing cavity according to the liquid supply rule (S 130). A problem of dry burning of an electronic cigarette caused by unbalanced liquid supply and cigarette liquid consumption in electronic cigarettes can be solved, and effects of avoiding dry burning and liquid explodes and improving a smoking taste of electronic cigarettes are achieved.

## Description

### TECHNICAL FIELD

The disclosure relates to the technical field of simulated smoking, in particular to a liquid supply method for an atomizer and a liquid supply apparatus thereof.

### BACKGROUND

As a substitute for cigarettes, electronic cigarettes are becoming more and more popular in the market because of their safety, convenience and environmental protection to a certain extent.

### SUMMARY

In order to solve the problem that the electronic cigarette is prone to the problem of unbalanced liquid supply and smoke liquid consumption in the prior art, which leads to the dry burning of the electronic cigarette. Embodiments of the present disclosure provide a liquid supply method for an atomizer and a liquid supply apparatus thereof. The technical solution is as follows:
A first aspect provides a liquid supply method for an atomizer, the method including:
when a heating member generates heat, acquiring resistance value of the heating member, wherein, the resistance value of the heating member changes with the temperature of the heating member;
obtaining a liquid supply rule according to the resistance value of the heating member, the liquid supply rule comprising at least one of a liquid supply speed of using a pump to supply liquid to the atomizing chamber, and a liquid supply duration of using the pump to supply liquid to the atomizing chamber in a unit time period;
controlling the pump to supply liquid to the atomizing chamber according to the liquid supply rule.

Alternatively, after controlling the pump to supply liquid to the atomizing chamber according to the liquid supply rule, the method further includes:
determining whether the temperature of the heating member reaches a predetermined temperature value according to the resistance value of the heating member;
if the temperature of the heating member reaches the predetermined temperature value, controlling the heating member stop heating.

Alternatively, after controlling the pump to supply liquid to the atomizing chamber according to the liquid supply rule, the method further includes:
if it is determined that the temperature of the heating member reaches the predetermined temperature value according to the resistance value of the heating member, obtaining a remaining liquid amount in a liquid storage chamber;
if the remaining liquid amount is lower than a predetermined liquid amount, displaying a first prompt information for prompting liquid replenishment to the liquid storage chamber;
if the remaining liquid amount reaches the predetermined liquid amount, a second prompt information for prompting maintenance of the pump is displayed.

Alternatively, after acquiring a resistance value of the heating member, the method further includes:
determining a liquid consumption speed of the heating member according to the resistance value of the heating member;
if the liquid consumption speed is higher than a first reference value, displaying a third prompt information for prompting that working parameter is too high, and/or controlling the heating member to stop heating;
wherein, the first reference value is the maximum liquid supply speed supported by the pump when the pump operates at the highest working voltage.

Alternatively, after acquiring a resistance value of the heating member, the method further includes:
determining a liquid consumption speed of the heating member according to the resistance value of the heating member;
if the liquid consumption speed is higher than a second reference value, set a working voltage of the pump to be higher than the minimum working voltage, the second reference value is the maximum liquid supply rate supported by the pump when operating at the lowest working voltage; and/or,
if the liquid consumption speed is lower than or equal to the second reference value, setting the working voltage of the pump to the minimum working voltage.

Alternatively, the obtaining a liquid supply rule according to the resistance of the heating member includes:
obtaining a working voltage of the pump, and determining the liquid supply speed of the pump according to the working voltage of the pump;
obtaining the liquid supply rule according to the liquid supply speed of the pump and the resistance value of the heating member, the liquid supply rule includes the liquid supply duration of using a pump to supply liquid to the atomizing chamber in the unit time period.

Alternatively, after acquiring a resistance value of the heating member, the method further includes:
determining a carbon deposition amount of the heating member according to the resistance value of the heating member;
when the carbon deposition amount of the heating member reaches an alarm threshold, displaying a fourth prompt information for prompting cleaning of the heating member.

In a second aspect, a computer-readable storage medium is provided, one or more instructions are stored in the computer-readable storage medium, when the one or more instructions are executed by the processor in the electronic cigarette, the liquid supply method according to the first aspect or optional embodiments of the first aspect is implemented.

In a third aspect, a liquid supply apparatus is provided, wherein the apparatus includes:
a memory and a processor;
at least one program instruction is stored in the memory;

The processor, by loading and executing the at least one program instruction, implements the liquid supply method according to the first aspect or optional embodiments of the first aspect.

The beneficial effects brought by the technical solutions provided in the embodiments of the present disclosure are:
the resistance value of the heating member is collected when the heating member generates heat, and the resistance value of the heating member changes with the temperature change of the heating member; obtaining the liquid supply rule according to the resistance value of the heating member, the liquid supply rule includes at least one of the liquid supply speed of using the pump to supply liquid to the atomizing chamber, and the liquid supply duration of using the pump to supply the liquid to the atomizing chamber in a unit time period; control the pump to supply liquid to the atomizing chamber according to the liquid supply rule, which solve the problem that the current electronic cigarette is prone to the problem of unbalanced liquid supply and smoke liquid consumption, which leads to the problem of dry burning of electronic cigarettes; the effect of avoiding dry burning, frying oil and improving the smoking taste of the electronic cigarette is achieved.

### BRIEF DESCRIPTION OF THE DRAWINGS

In order to illustrate the technical solutions in the embodiments of the present disclosure more clearly, the following briefly introduces the accompanying drawings used in the description of the embodiments. Obviously, the accompanying drawings in the following description are only some embodiments of the present disclosure. For those of ordinary skill in the art, other drawings can also be obtained from these drawings without creative effort.

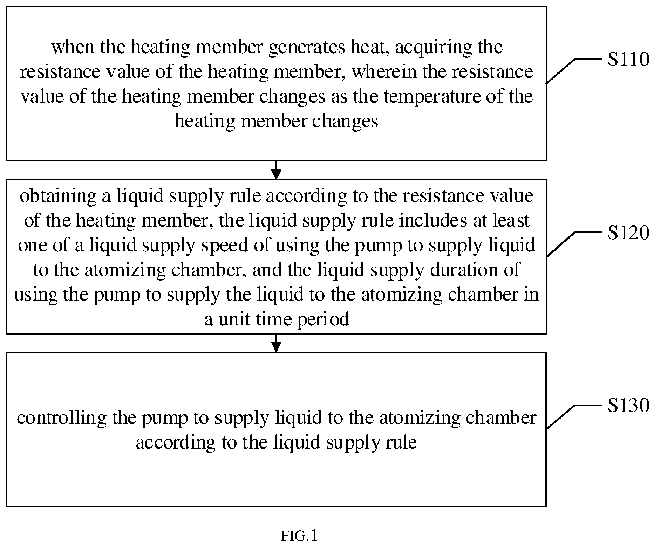

FIG. 1 is a method flowchart of a liquid supply method for an atomizer provided by an embodiment of the present disclosure.

### DETAILED DESCRIPTION OF PREFERRED EMBODIMENTS

In order to make the objectives, technical solutions and advantages of the present disclosure clearer, the embodiments of the present disclosure will be further described in detail below with reference to the accompanying drawings.

In the method provided by the embodiment of the present disclosure, the execution subject of each step may be an atomizing apparatus. The atomizing apparatus is provided with a pump for transporting the liquid in the liquid storage chamber to the atomizing chamber, the pump can be a liquid pump or an air pump. The atomizing apparatus involved in this application is an apparatus with atomizing capability, which can be an electronic cigarette, a humidifier, etc. This application uses an electronic cigarette atomizer to atomize liquid smoke as an example.

In one embodiment, the pump provided in the atomizing apparatus can be a liquid pump, the liquid inlet of the liquid pump is communicated with the liquid storage chamber in the atomizing apparatus, the liquid outlet of the liquid pump is communicated with the atomizing chamber. When the liquid pump is working, the liquid can be extracted from the liquid storage chamber and transported to the atomizing chamber to realize liquid supply.

In another example, the bottom of the atomizing chamber is provided with an air inlet hole. A one-way valve is arranged in the air inlet hole. The atomizing apparatus is also provided with a liquid guiding passage and an air pump communicating with the air inlet hole, the liquid guiding passage is arranged inside the liquid storage chamber. The liquid guiding passage is communicated with the atomizing chamber; the airflow generated when the air pump is in operation enters the liquid guiding passage through the air inlet hole, and pushes the liquid in the liquid guiding passage to the atomizing chamber to realize liquid supply.

Wherein, a heating member is arranged in the atomizing chamber of the atomizing apparatus, the resistance of the heating member changes with the temperature of the heating member. Alternatively, the heating member may be an NTC (Negative Temperature Coefficient) heating member, or a PTC (English: Positive Temperature Coefficient) heating member, such as a SS316 temperature change heating wire, which is not specifically limited in this application.

Please refer to FIG. 1, which shows a method flowchart of a liquid supply method for an atomizer provided by an embodiment of the present disclosure. This embodiment is illustrated by using the liquid supply method in an electronic cigarette. As shown in FIG. 1, the liquid supply method may include:
In step 110, when the heating member generates heat, acquiring the resistance value of the heating member, wherein the resistance value of the heating member changes as the temperature of the heating member changes.

A resistance value sampling circuit may be arranged in the electronic cigarette, and the resistance value sampling circuit is configured to collect the resistance value of the heating member.

The implementation of this step may be: when the heating member generates heat, the resistance value of the heating member is collected every unit time period. The duration corresponding to a unit time period is usually set by the system developer, and can also be customized by the user. For example, the system developer can set the duration corresponding to a unit time period to 1 millisecond, 0.5 millisecond, and so on.

Step 120, obtaining a liquid supply rule according to the resistance value of the heating member, the liquid supply rule includes at least one of a liquid supply speed of using the pump to supply liquid to the atomizing chamber, and the liquid supply duration of using the pump to supply the liquid to the atomizing chamber in a unit time period.

The following describes the two adjustment methods of the working voltage of the pump respectively:
The first adjustment method: the working voltage of the pump can only be switched among one or more predetermined working voltages, the implementation of step 120 can be as follows: the corresponding relationship between the liquid consumption speed of the atomizer and the resistance value of the heating member can be stored in the electronic cigarette. The corresponding relationship can be stored in the electronic cigarette in the form of a table, output curve, etc.; the corresponding relationship can be set by the system developer through many experiments. The electronic cigarette collects the resistance value of the heating member by performing step 110, and inquires the liquid consumption speed corresponding to the resistance value of the heating member collected in the corresponding relationship. The liquid supply rule is obtained according to the liquid consumption speed, and the liquid supply rule includes the liquid supply time.

In actual implementation, the temperature of the heating member can also be inquired according to the resistance value of the heating member; the corresponding relationship between the resistance value of the heating member and its temperature stored in the electronic cigarette; query the liquid consumption speed corresponding to the temperature of the heating member; then, a liquid supply rule is obtained according to the liquid consumption speed, and the liquid supply rule includes the liquid supply time.

In one example, if the working voltage of the pump is fixed and not adjustable, the realization of obtaining the liquid supply rule according to the liquid consumption speed can be as follows: calculating the product of the liquid consumption speed corresponding to the resistance value of the heating member and the duration of a unit time period to obtain the smoke liquid consumption per unit time period; then calculating the quotient of the smoke liquid consumption and the liquid supply speed of the pump to obtain the liquid supply duration of using the pump to supply liquid to the atomizing chamber in a unit time period in the liquid supply rule. Wherein, the liquid supply speed of the pump refers to the maximum liquid supply speed that the pump can obtain under the driving of the above-mentioned fixed-value voltage.

In another example, if the working voltage of the pump can be switched among multiple working voltages, the realization of the liquid supply rule obtained according to the liquid consumption speed can be as follows: if the liquid consumption speed is higher than the second reference value, set the working voltage of the pump to be higher than the minimum working voltage, the second reference value is the maximum liquid supply speed supported by the pump when it operates at the lowest working voltage; if the liquid consumption speed is lower than or equal to the second reference value, set the working voltage of the pump to the minimum working voltage; obtain the set working voltage of the pump, and determining the pump's liquid supply speed according to the set working voltage of the pump; obtain the liquid supply rules according to the set liquid supply speed of the pump and the resistance value of the heating member. The liquid supply rule includes the liquid supply duration of using the pump to supply liquid to the atomizing chamber in a unit time period.

Among them, the specific implementation of obtaining the liquid supply rule according to the liquid supply speed of the pump and the resistance value of the heating member can be as follows: calculating the product of the liquid consumption speed corresponding to the resistance value of the heating member and the duration of a unit time period to obtain the smoke liquid consumption per unit time period; then calculating the quotient of the smoke liquid consumption and the maximum liquid supply speed of the pump driven by the working voltage set above, to obtain the liquid supply time of using the pump to supply liquid to the atomizing chamber in a unit time period in the liquid supply rule; the supply rule also includes the working voltage set for the pump.

Among them, if the working voltage supported by the pump includes not only the minimum working voltage and the maximum working voltage, but also other working voltages; then, when the liquid consumption speed is higher than the second reference value, the specific implementation of setting the working voltage of the pump to be higher than the minimum working voltage can be as follows: increase the working voltage level of the pump until the maximum liquid supply speed corresponding to the working voltage set by the pump is higher than or equal to the liquid consumption speed. The working voltage rating of the pump is proportional to the working voltage it supports.

In actual implementation, other processing may also be performed on the liquid supply duration, for example, adding a constant, for example, increasing a predetermined ratio, etc., which is not specifically limited in this embodiment.

The second adjustment method: the working voltage of the pump can be switched to any voltage value between the minimum working voltage and the maximum working voltage, the step 120 can be implemented in the following ways: the corresponding relationship between the liquid consumption speed of the atomizer and the resistance value of the heating member can be stored in the electronic cigarette, the corresponding relationship can be stored in the electronic cigarette in the form of a table, output curve, etc.; the corresponding relationship can be set by the system developer through many experiments; the liquid consumption speed corresponding to the resistance value of the heating member is collected in the corresponding relationship, and the liquid consumption speed is added to the liquid supply rule. When the electronic cigarette works according to the liquid supply rule, the pump can be controlled to supply liquid according to the liquid supply speed whose value is equal to the liquid consumption speed.

In actual implementation, the temperature of the heating member can also be inquired first according to the resistance value of the heating member, and the corresponding relationship between the resistance value of the heating member and its temperature is stored in the electronic cigarette; query the liquid consumption speed corresponding to the temperature of the heating member; then add the liquid consumption speed to the liquid supply rule.

Step 130: controlling the pump to supply liquid to the atomizing chamber according to the liquid supply rule.

This step can be achieved in the following ways:
First, the working voltage of the pump is a fixed value and cannot be adjusted. The liquid supply rule includes the liquid supply duration of using the pump to supply liquid to the atomizing chamber within a unit time period, and the implementation of step 130 may be: control the pump to work to the liquid supply time specified in the liquid supply rule within a unit time period. Alternatively, the liquid supply is started at the start time of the unit time period, and the liquid supply is continued for the liquid supply duration.

For example, during the heating process of the heating member, the resistance value of the heating member is obtained every 1ms, and the liquid supply rule is determined according to the resistance value of the heating member. If the liquid supply rule indicates that the liquid supply time is 0.05ms, the pump will be configured to supply liquid to the atomizing chamber for 0.05ms and then the pump will stop working. The next time the resistance value of the heating member is obtained, a new liquid supply rule is obtained, and liquid is supplied according to the new liquid supply rule.

Second, the working voltage of the pump can be switched within a predetermined working voltage, the liquid supply rule includes the working voltage set for the pump and the liquid supply duration, and the implementation of step 130 can be as follows: in a unit time period, the pump is controlled to continuously work according to the working voltage in the liquid supply rule to reach the liquid supply time period in the liquid supply rule. Alternatively, the liquid supply starts at the beginning of a unit time period, and the liquid supply continues to reach the liquid supply time.

Third, the working voltage of the pump can be switched to any voltage value between the minimum working voltage and the maximum working voltage, the liquid supply rule includes the liquid supply speed, and the implementation of step 130 may be: obtain the working voltage corresponding to the liquid supply speed, control the pump to work according to the working voltage, so that the liquid supply speed of the pump reaches the liquid supply speed specified by the liquid supply rules; when the temperature of the heating member increases, the liquid supply speed of the pump is increased, and the temperature of the heating member decreases, the liquid supply rate of the pump is reduced, so as to achieve a balance between liquid supply and smoke liquid consumption.

To sum up, in the method provided by the embodiment of the present disclosure, the resistance value of the heating member is collected when the heating member generates heat, and the resistance value of the heating member changes with the temperature change of the heating member; obtain the liquid supply rule according to the resistance value of the heating member, the liquid supply rule includes at least one of the liquid supply speed of using the pump to supply liquid to the atomizing chamber, and the liquid supply duration of using the pump to supply the liquid to the atomizing chamber in a unit time period; control the pump to supply liquid to the atomizing chamber according to the liquid supply rule, which solve the problem that the current electronic cigarette is prone to the problem of unbalanced liquid supply and smoke liquid consumption, which leads to the problem of dry burning of electronic cigarettes; the effect of avoiding dry burning, frying oil and improving the smoking taste of the electronic cigarette is achieved.

Alternatively, after controlling the pump to supply liquid to the atomizing chamber according to the liquid supply rule, determining whether the temperature of the heating member reaches a predetermined temperature value according to the resistance value of the heating member. If the temperature of the heating member reaches the predetermined temperature value, it means that the pump in the atomizing apparatus cannot supply liquid to the atomizing chamber, and at this time, the heating member is controlled to stop heating. The predetermined temperature value mentioned here is usually set by the developer, for example, the developer determines the predetermined temperature value according to the temperature of the heating member when it is dry-burning.

Wherein, determining whether the temperature of the heating member reaches the predetermined temperature value according to the resistance value of the heating member can be realized in the following two ways:1. determining the temperature of the heating member according to the resistance value of the heating member. For example, the electronic cigarette stores the corresponding relationship between the resistance value of the heating member and the temperature of the heating member, and obtains the temperature corresponding to the resistance value of the heating member to obtain the temperature of the heating member; determining the magnitude relationship between the temperature of the heating member and the predetermined temperature value;2. The heating member is NTC heating member, if the resistance value of the heating member is less than or equal to the predetermined resistance value, it is determined that the temperature of the heating member reaches the predetermined temperature value, the predetermined resistance value is the resistance value of the heating member at a predetermined temperature value.

Alternatively, if it is determined according to the resistance value of the heating member that the temperature of the heating member reaches a predetermined temperature value, obtain the remaining liquid amount in the liquid storage chamber; if the remaining liquid amount is lower than the predetermined liquid amount, it may be that there is less smoke liquid in the liquid storage chamber, so that the pump cannot supply liquid to the atomizing chamber; then displaying the first prompting information for prompting to add liquid to the liquid storage chamber. If the remaining liquid amount reaches the predetermined liquid amount, a second prompt information for prompting to service the pump is displayed.

Among them, obtaining the remaining amount of smoke liquid in the liquid storage chamber can be achieved in various ways. For example, a liquid level detector can be arranged in the liquid storage chamber to determine the remaining amount of smoke liquid in the liquid storage chamber. For another example, the e-liquid consumption can be calculated when the atomizer is installed on the electronic cigarette body, and the remaining e-liquid amount can be obtained by subtracting the e-liquid consumption from the total e-liquid amount in the atomizer, which will not be described in detail in this application. In addition, the predetermined liquid amount is usually set by the developer and can also be customized by the user. The display manner of the first prompt information and the second prompt information may be any one of text prompts on the display screen, voice prompts, vibration prompts, buzzer prompts, and the like, which are not specifically limited in this embodiment.

The electronic cigarette involved in this application can be operated by the electronic cigarette user to set the working parameters of the atomizer, the working parameters mentioned here include any one of working voltage, working current, output power, etc. Alternatively, after collecting the resistance value of the heating member, the liquid consumption speed of the heating member can also be determined according to the resistance value of the heating member; if the fluid consumption rate is higher than the first reference value, a third prompt information for prompting that the working parameter is too high is displayed, and/or, control the heating member to stop heating, so as to avoid excessively high working parameters set by electronic cigarette users, which may easily lead to dry burning; wherein, the first reference value is the maximum liquid supply speed supported by the pump when the pump operates at the highest working voltage.

Alternatively, when the electronic cigarette receives a cigarette lighting signal, it controls the atomizer to perform atomizing work according to the set working parameters, and performs several steps as shown in FIG. 1.

Alternatively, after collecting the resistance value of the heating member, the carbon deposition amount of the heating member is also determined according to the resistance value of the heating member; when the carbon deposition amount of the heating member reaches the alarm threshold, a fourth prompt information for prompting the cleaning of the heating member is displayed. Among them, the specific implementation of determining the carbon deposition amount of the heating member according to the resistance value of the heating member can be as follows: count the duration that the heating member maintains the resistance value; obtain the carbon deposition rate corresponding to the resistance value, calculating the product of the carbon deposition rate and the duration, use the product to update the carbon deposition amount of the heating member. Among them, the corresponding relationship between the resistance value of the heating member and the carbon deposition rate is stored in the electronic cigarette, and the corresponding relationship is usually set by the developer.

An embodiment of the present disclosure further provides a computer-readable storage medium, one or more instructions are stored in the computer-readable storage medium, when the one or more instructions are executed by the processor in the atomizing apparatus or the electronic cigarette, the liquid supply method involved in any of the foregoing embodiments is implemented.

An embodiment of the present disclosure also provides a liquid supply apparatus, the control apparatus includes: a memory and a processor; at least one program instruction is stored in the memory; the processor implements the liquid supply method involved in any of the foregoing embodiments by loading and executing the at least one program instruction.

The terms "first" and "second" are used for descriptive purposes only, and should not be understood as indicating or implying relative importance or implying the indicated number of technical features. Thus, a feature defined as "first", "second" may expressly or implicitly include one or more of that features. In the description of the present disclosure, unless otherwise specified, "plurality" means two or more.

Those of ordinary skill in the art can understand that all or part of the steps of implementing the above embodiments can be completed by hardware, or can be completed by instructing relevant hardware through a program, and the program can be stored in a computer-readable storage medium. The storage medium mentioned may be a read-only memory, a magnetic disk or an optical disk, etc.

The above descriptions are only preferred embodiments of the present disclosure, and are not intended to limit the present disclosure.

Any modification, equivalent replacement, improvement, etc. made within the spirit and principle of the present disclosure shall be included within the protection scope of the present disclosure.

## Claims

1. A liquid supply method for an atomizer, the method comprising:
when a heating member generates heat, acquiring a resistance value of the heating member, wherein the resistance value of the heating member changes with the temperature of the heating member;
obtaining a liquid supply rule according to the resistance value of the heating member, the liquid supply rule comprising at least one of a liquid supply speed of using a pump to supply liquid to the atomizing chamber, and a liquid supply duration of using the pump to supply liquid to the atomizing chamber in a unit time period;
controlling the pump to supply liquid to the atomizing chamber according to the liquid supply rule.

2. The method according to claim **1**, wherein after controlling the pump to supply liquid to the atomizing chamber according to the liquid supply rule, the method further comprises:
determining whether the temperature of the heating member reaches a predetermined temperature value according to the resistance value of the heating member;
if the temperature of the heating member reaches the predetermined temperature value, controlling the heating member stop heating.

3. The method according to claim **1**, wherein after controlling the pump to supply liquid to the atomizing chamber according to the liquid supply rule, the method further comprises:
if it is determined that the temperature of the heating member reaches the predetermined temperature value according to the resistance value of the heating member, obtaining a remaining liquid amount in a liquid storage chamber;
if the remaining liquid amount is lower than a predetermined liquid amount, displaying a first prompt information for prompting liquid replenishment to the liquid storage chamber;
if the remaining liquid amount reaches the predetermined liquid amount, a second prompt information for prompting maintenance of the pump is displayed.

4. The method according to claim **1**, wherein after acquiring a resistance value of the heating member, the method further comprises:
determining a liquid consumption speed of the heating member according to the resistance value of the heating member;
if the liquid consumption speed is higher than a first reference value, displaying a third prompt information for prompting that the working parameter is too high, and/or controlling the heating member to stop heating;
wherein, the first reference value is the maximum liquid supply speed supported by the pump when the pump operates at the highest working voltage.

5. The method according to claim **1**, wherein after acquiring a resistance value of the heating member, the method further comprises:
determining a liquid consumption speed of the heating member according to the resistance value of the heating member;
if the liquid consumption speed is higher than the second reference value, set a working voltage of the pump to be higher than the minimum working voltage, the second reference value is the maximum liquid supply rate supported by the pump when operating at the lowest working voltage; and/or,
if the liquid consumption speed is lower than or equal to the second reference value, setting the working voltage of the pump to the minimum working voltage.

6. The method according to claim **1**, wherein the step of obtaining a liquid supply rule according to the resistance value of the heating member comprises:
obtaining a working voltage of the pump, and determining the liquid supply speed of the pump according to the working voltage of the pump;
obtaining the liquid supply rule according to the liquid supply speed of the pump and the resistance value of the heating member, the liquid supply rule comprises the liquid supply duration of using the pump to supply liquid to the atomizing chamber in the unit time period.

7. The method according to claim **1**, wherein after the step of acquiring a resistance value of the heating member, the method further comprises:
determining a carbon deposition amount of the heating member according to the resistance value of the heating member;
when the carbon deposition amount of the heating member reaches an alarm threshold, displaying a fourth prompt information for prompting cleaning of the heating member.

8. A computer-readable storage medium, one or more instructions are stored in the computer-readable storage medium, when the one or more instructions are executed by the processor in the electronic cigarette, the liquid supply method of any one of claims **1** to **7** is implemented.

9. A liquid supply apparatus comprising:
a memory and a processor;
at least one program instruction is stored in the memory;
the processor, by loading and executing the at least one program instruction, implements the liquid supply method according to any one of claims **1** to **7**.
